# DEMANDE DE BREVET EUROPEEN

(11) **EP 0 678 757 A1**
(43) Date de publication de la demande: **25.10.1995**
(21) Numéro de dépôt: 95400848.8
(22) Date de dépôt: 14.04.1995
(51) Int. Cl.: G01T 5/08, G01T 1/20

(54) **Dispositif de détection à distance de rayonnement**

(30) Priorité: 19.04.1994 FR 9404641
(71) Demandeur: COMMISSARIAT A L'ENERGIE ATOMIQUE, F-75015 Paris (FR)
(72) Inventeur: Thevenin, Jean-Claude, F-78140 Velizy (FR)
(74) Mandataire: Dubois-Chabert, Guy

(57) **Abrégé**

Ce dispositif comprend une fibre optique (4), un cristal détecteur (10) dont une extrémité est optiquement couplée à la fibre optique et qui est apte à émettre, par interaction avec le rayonnement (2), une lumière se propageant ensuite dans la fibre optique, et une gaine optique (12) qui entoure le cristal détecteur, qui est en contact optique avec celui-ci et dont l'indice optique est inférieur à celui du cristal détecteur, de manière à confiner ladite lumière, par réflexion totale. Application à la dosimétrie.

## Description

La présente invention concerne un dispositif de détection à distance de rayonnement.

Elle s'applique notamment à la dosimètrie et plus particulièrement à la microdosimétrie.

Pour faire une mesure à distance d'un rayonnement, comme par exemple un rayonnement X ou un rayonnement γ, il est connu d'utiliser une fibre optique à une extrémité de laquelle est placé un élément susceptible d'émettre une lumière en présence du rayonnement.

On détecte ainsi le rayonnement grâce à l'interaction de celui-ci avec la matière constitutive de l'élément qui est traversé par ce rayonnement.

Plus la quantité de matière intervenant dans la détection est faible, plus faible est la sensibilité potentielle du détecteur ainsi obtenu.

En effet, l'énergie déposée par le rayonnement s'exprime en joules par kilogramme de matière.

Pour un émetteur donné, la luminescence produite est proportionnelle à l'énergie déposée.

Pour un cristal comme NaI, il faut y déposer environ 25 eV pour produire un photon dont la longueur d'onde est voisine de 410 µm.

Il en résulte que pour une mesure de dose donnée, lorsque la masse décroît, l'énergie correspondante décroît et il en est donc de même pour la luminosité et, par conséquent, pour la sensibilité.

La plus faible dose détectable correspond au seuil de sensibilité du détecteur de lumière (par exemple un photomultiplicateur).

Un photomultiplicateur ayant un rendement quantique de photocathode de 20% détectera un signal minimum en impulsion d'une dizaine de photons de 2 à 3 eV (parvenant à sa fenêtre d'entrée).

L'énergie déposée mesurée dépend de l'énergie minimum déposée par chaque particule et du nombre de particules converties dans l'élément détecteur.

Si la masse du détecteur décroît, le seuil de dose détectable croît.

Une fibre optique présente l'avantage de pouvoir transmettre la lumière sur de grandes distances avec de faibles pertes d'énergie.

L'utilisation d'une fibre optique impose un certain nombre de contraintes qui affectent la sensibilité du détecteur associé.

De plus, le couplage d'un matériau avec une fibre optique introduit deux limitations, à savoir une limitation dimensionnelle, compte tenu du diamètre du coeur de la fibre optique, et une limitation angulaire qui impose que la lumière collectée soit acceptée par la fibre optique compte tenu de l'ouverture numérique de celle-ci.

En conséquence, la fibre optique limite la quantité de matière produisant de la lumière acceptée et transmise par cette fibre.

En fait, la lumière collectée par la fibre optique est une fonction de cette ouverture numérique, de la distance entre le point de production de cette lumière et l'extrémité correspondante de la fibre et de la distance de ce point à l'axe de cette fibre.

Etant donné, par exemple, une fibre optique en silice (dont l'indice optique est de l'ordre de 0,27) et un cristal détecteur qui est optiquement couplé à cette fibre et dont les dimensions, comptées perpendiculairement à l'axe de celle-ci, sont grandes par rapport à celles de la fibre, également comptées perpendiculairement à cet axe, la lumière produite par interaction d'un rayonnement avec le cristal n'est acceptée, dans la pleine ouverture angulaire de la fibre, qu'à la condition d'être produite au voisinage immédiat de l'extrémité de celle-ci.

La quantité de lumière acceptée par la fibre décroît rapidement lorsque le point en lequel cette lumière est engendrée se trouve au-delà d'une distance de l'ordre de 0,5 à 1 mm de l'extrémité correspondante de la fibre.

Un détecteur optique de rayonnement connu est constitué par un scintillateur inorganique optiquement couplé à un photomultiplicateur.

Pour obtenir un tel détecteur, on place un bloc de grand diamètre de ce scintillateur inorganique devant la photocathode du photomultiplicateur.

Dans ce cas, le problème de la collection de la lumière résultant de l'interaction du rayonnement avec le scintillateur est résolu en plaçant ce bloc de scintillateur dans un boîtier dont la face interne est revêtue d'un dépôt réfléchissant ou diffusant d'albédo élevé (une couche de MgO par exemple).

Ainsi la collection de lumière ne pose pas de difficultés dans le cas d'un cristal détecteur couplé à un photomultiplicateur tant que l'épaisseur du cristal détecteur est à peu près égale, voire inférieure, aux dimensions transversales de ce cristal, ces dimensions transversales étant environ égales au diamètre de la photocathode du photomultiplicateur.

En revanche, la collection de la lumière engendrée dans un cristal détecteur, par une fibre optique couplée à ce cristal détecteur, pose un problème, comme on l'a vu plus haut, puisque le signal de mesure dosimétrique, qui est le signal lumineux transmis par la fibre, décroît rapidement lorsque la lumière est engendrée au-delà d'une distance relativement faible de l'extrémité correspondante de la fibre.

Pour la détection de rayonnements au moyen de fibres optiques, il est connu d'utiliser des fibres optiques plastiques scintillantes par le document suivant :
(1) EP-A-0 107 532 correspondant à US-A-4,552,431.

Une utilisation de telles fibres optiques scintillantes en dosimétrie est décrite dans le document suivant :
(2) "Scintillating fibre detector system for spacecraft dosimetry", C.P.W. Boeder, L. Adams et R. Nickson, RADEC'93, Saint Malo (France), 13-16 Sept. 1993.

A ce sujet, on se reportera également au document suivant :
(3) "Fibre-optic nuclear detector system", technical description, production version 1993-FND-C2, SENSYS (Sensor System) P.O. Box 411 2200AK NOORDWIJK The Netherlands.

Le document (1) décrit des procédés de réalisation de fibres optiques scintillantes à coeur en polystyrène.

Ces fibres sont utilisées dans de grands détecteurs de particules, généralement pour localiser des particules chargées (comme les électrons, les protons et les mésons π par exemple) et également dans des calorimètres de puissance e⁻, γ à haute résolution spatiale et à haute résolution en énergie.

Ces calorimètres sont constitués de couches alternées de fibres et d'un élément absorbant, qui convertit le rayonnement incident.

Les documents (2) et (3) divulguent un appareil de dosimétrie à résolution élevée utilisant environ 10 cm d'une fibre optique scintillante du genre de celles qui sont mentionnées dans le document (1).

Cette fibre optique scintillante, en matériau polymère, présente une très faible capacité d'interaction et de conversion de l'énergie des photons γ ; elle est donc placée dans un cylindre métallique en aluminium, de faible épaisseur, qui joue le rôle de convertisseur de rayonnement.

La lumière émise par la fibre scintillante, sous l'effet d'un rayonnement ionisant, est ensuite transmise par une fibre optique non dopée, également à coeur en polystyrène, vers un détecteur à semiconducteur en GaAsP à très faible courant d'obscurité.

Un autre appareil de dosimétrie est mentionné dans le document suivant :
(4) US-A-5,030,834 (Lindmayer et al.).

Ce document concerne un appareil de mesure dosimétrique dont l'élément sensible est un bloc de sulfure de strontium dopé, possédant des propriétés de luminescence.

Il s'agit de luminescence optiquement stimulée ("opticaly stimulated luminescence").

Ce bloc, de quelques millimètres de côté, est placé à l'extrémité d'une fibre optique en silice de 0,2 mm de diamètre.

Le matériau dopé utilisé contient des éléments comme le samarium ou l'europium qui comportent des niveaux métastables.

Ces niveaux de stockage sont peuplés, sous l'effet du rayonnement, proportionnellement à la dose reçue.

L'émission lumineuse d'un laser YAG, envoyée sur le bloc de SrS par l'intermédiaire de la fibre optique, permet, en vidant les niveaux de stockage, de stimuler une émission lumineuse qui est proportionnelle à la dose reçue.

Dans les documents (2) et (3), il est question d'une structure guidée à fibre optique plastique.

Cependant, les matières plastiques présentent des propriétés médiocres pour la détection des rayonnements γ.

Il est généralement préférable, pour la détection du rayonnement γ, d'utiliser des cristaux inorganiques de numéro atomique Z plus élevé comme les cristaux de NaI ou BGO.

Dans le cas du document (4), le matériau utilisé est capable de détecter un rayonnement γ.

Cependant, le volume efficace, qui produit la lumière acceptée par la fibre optique, est très limité.

Ceci correspond à l'inconvénient mentionné plus haut.

En fait, quelle que soit la taille du cristal de SrS placé à l'extrémité de la fibre optique, le volume efficace est limité, d'une part du fait du diamètre de la fibre optique (200 µm) et d'autre part en épaisseur, du fait de la limitation en ouverture numérique.

Par exemple, pour une fibre de diamètre 200 µm et d'ouverture ±15° (fibre silice/silicone), la lumière collectée décroît rapidement pour des distances à la face d'entrée de la fibre supérieure à 0,8 mm.

On connaît également des détecteurs dosimétriques qui comprennent des fibres optiques mais n'utilisent pas les phénomènes de luminescence.

Ces détecteurs dosimétriques utilisent l'absorption induite dans les fibres optiques par les modifications de structure créées par le rayonnement.

De tels détecteurs sont moins sensibles, nécessitent des longueurs de fibre plus importantes et fonctionnement suivant un principe d'accumulation qui nécessite de renouveler fréquemment les fibres optiques.

De plus, des effets limités de récupération thermique, éventuellement à température ambiante, viennent perturber la précision des mesures.

La présente invention a pour but de remédier aux inconvénients des dispositifs de détection connus, mentionnés plus haut, en proposant un dispositif de détection à distance de rayonnement, qui comprend un cristal détecteur fait d'un matériau inorganique et associé à une fibre optique et dont l'efficacité de détection reste à sa valeur maximale sur toute la longueur du cristal et n'est plus limitée que par l'ouverture numérique de la fibre optique.

De façon précise, la présente invention a pour objet un dispositif de détection à distance de rayonnement, ce dispositif comprenant une fibre optique et un cristal détecteur qui est fait d'un matériau inorganique, dont une extrémité est optiquement couplée à la fibre optique et qui est apte à émettre, par interaction avec le rayonnement, une lumière se propageant ensuite dans la fibre optique, ce dispositif étant caractérisé en ce qu'il comprend en outre une gaine optique qui entoure le cristal détecteur, qui est en contact optique avec celui-ci et dont l'indice optique est inférieur à celui du cristal détecteur, de manière à confiner ladite lumière, par réflexion totale à l'interface entre le cristal détecteur et la gaine optique.

Certes, on connaît aussi par le document (5) US-A-4 788 436 (W. Koechner) un dispositif de détection de rayonnement comprenant une fibre optique dont le coeur est en un matériau plastique scintillant et qui est optiquement couplée à une fibre à coeur en verre. Dans la présente invention, on utilise, sous forme d'une structure optiquement guidée, un matériau inorganique qui présente, à volume égal, une plus grande capacité d'interaction avec un rayonnement que les matériaux sctintillateurs plastiques.

Selon un mode de réalisation particulier du dispositif objet de l'invention, la dimension du cristal détecteur, comptée suivant l'axe de la fibre optique, est supérieure aux dimensions de ce cristal détecteur, comptées perpendiculairement à cet axe.

Selon un mode de réalisation préféré du dispositif objet de l'invention, les dimensions du cristal détecteur, comptées perpendiculairement à l'axe de la fibre optique, sont sensiblement égales à celles du coeur de cette fibre optique, comptées perpendiculairement à cet axe.

La lumière collectée par la fibre optique est alors supérieure à ce qu'elle serait si ces dimensions du cristal détecteur étaient supérieure à celles du coeur de la fibre optique.

De préférence, les indices optiques respectifs du cristal détecteur et de la gaine optique sont choisis de façon que l'ouverture numérique du cristal détecteur pourvu de cette gaine optique soit légèrement inférieure à celle de la fibre optique.

Comme on le verra par la suite, ceci permet de réduire les risques de perturbation du signal lumineux récupéré par la fibre, par des variations de courbure de cette fibre.

Il est également préférable que la paroi externe de la gaine optique soit recouverte d'une couche apte à absorber la lumière engendrée par interaction du rayonnement avec le cristal détecteur.

Il est en outre préférable, pour augmenter encore la sensibilité du dispositif objet de l'invention, de recouvrir l'extrémité du cristal détecteur, opposée à celle qui est optiquement couplée à la fibre optique, d'une couche apte à réfléchir cette lumière.

Le cristal détecteur peut être fait d'un matériau inorganique scintillant.

Ce matériau inorganique scintillant peut être choisi dans le groupe comprenant le germanate de bismuth, l'iodure de sodium, le tungstanate de calcium, le tungstanate de cadmium, le fluorure de césium, le fluorure de calcium et l'iodure de lithium.

En variante, le cristal détecteur peut être fait d'un matériau inorganique à luminescence stimulable optiquement.

Ce matériau à luminescence stimulable optiquement peut être choisi dans le groupe comprenant les sulfures dopés, la silice dopée, les oxydes dopés tel que l'oxyde de germanium dopé, les verres optiques dopés et les verres fluorés dopés, les dopages étant faits à l'aide de terres rares.

La gaine optique peut être faite d'un matériau choisi dans le groupe comprenant la silice, les verres à base de silice, les verres organiques, les verres fluorés, les verres de chalcogénures et les matériaux polymères.

La présente invention sera mieux comprise à la lecture d'exemples de réalisation donnés ci-après, à titre purement indicatif et nullement limitatif, en faisant référence aux dessins annexés sur lesquels :
· la figure 1 est une schématique et partielle d'un mode de réalisation particulier du dispositif objet de l'invention, comprenant un cristal détecteur fait d'un matériau inorganique scintillant, et
· la figure 2 est une vue schématique et partielle d'un autre mode de réalisation particulier du dispositif objet de l'invention, dont le cristal détecteur est fait d'un matériau à luminescence stimulable optiquement.

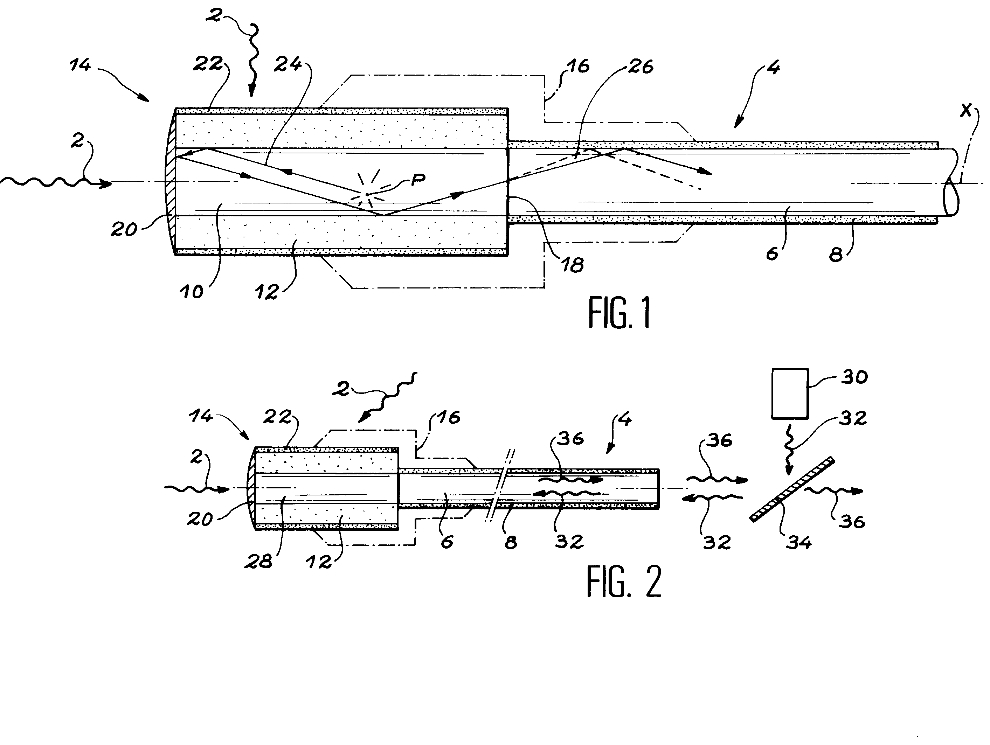

Sur la figure 1, on a représenté de façon schématique et partielle un dispositif conforme à l'invention permettant la détection à distance d'un rayonnement 2, comme par exemple un rayonnement X ou un rayonnement γ.

Le dispositif de la figure 1 comprend une fibre optique 4 dont le coeur et la gaine optique ont respectivement les références 6 et 8.

La fibre optique 4 a une grande ouverture numérique, par exemple de l'ordre de 0,43 (±25°).

Le dispositif de la figure 1 comprend aussi un cristal détecteur 10 dont une extrémité est optiquement couplée à la fibre optique 4.

Le dispositif de la figure 1 comprend en outre une gaine optique 12 ("optical cladding") qui entoure le cristal détecteur 10, qui est en contact optique avec celui-ci et dont l'indice optique est inférieur à celui du cristal détecteur.

Ce cristal détecteur 10 est fait d'un matériau inorganique, qui absorbe fortement le rayonnement incident et qui de ce point de vue est plus favorable qu'une matière plastique.

Le cristal détecteur 10 est capable d'émettre, par interaction, avec le rayonnement incident 2, une lumière qui se propage ensuite dans la fibre optique 4.

L'élément de détection 14, formé par le cristal détecteur 10 et la gaine optique 12 qui lui est associée, permet de confiner, par réflexion totale à l'interface entre le cristal détecteur 10 et la gaine optique 12, la lumière résultant de cette interaction qui est incluse dans l'angle solide accepté par la fibre optique.

Dans l'exemple de la figure 1, le cristal détecteur 10 a la forme d'un barreau dont les dimensions transversales, comptées perpendiculairement à l'axe X de l'extrémité de la fibre 4 auquel ce barreau est optiquement couplé, sont sensiblement égales à celles du coeur de la fibre optique 4, également comptées perpendiculairement à l'axe X.

On utilise par exemple une fibre optique à symétrie de révolution autour de l'axe X et un barreau également à symétrie de révolution autour de cet axe X et ayant sensiblement le même rayon que le coeur de la fibre 4, ce rayon étant très inférieur à la longueur du barreau (qui est comptée parallèlement à l'axe X).

On collecte ainsi plus de lumière avec la fibre optique 4 que si le barreau avait des dimensions transversales supérieures à celles de la fibre.

L'élément détecteur 14 permet, grâce à la gaine 12, de maintenir sensiblement constante la quantité de lumière collectée par la fibre optique 4, sur la totalité de la longueur de détection qui est la longueur du cristal détecteur 10.

En d'autres termes, à l'absorption optique du matériau près, cette quantité de lumière collectée reste constante quelle que soit la position du point P du cristal détecteur 10, point en lequel est émise la lumière par interaction du cristal avec le rayonnement.

On dispose ainsi d'un dispositif de détection ayant une bonne sensibilité pour la dosimétrie, c'est-à-dire présentant une masse efficace suffisante, du fait du matériau constitutif du cristal détecteur, de la grande ouverture de la fibre optique et de la gaine optique.

Dans l'exemple de la figure 1, le cristal détecteur 10 est fait d'un matériau inorganique scintillant comme par exemple le germanate de bismuth, l'iodure de sodium, le tunstanate de calcium ou de cadmium, le fluorure de césium, le fluorure de calcium ou l'iodure de lithium.

La gaine optique 12, qui constitue un tube transparent d'indice optique plus faible que celui du cristal détecteur 10 et qui est en contact optique avec ce dernier, est faite d'un matériau dont les propriétés physiques et thermiques sont choisies en fonction de celles du matériau constitutif du cristal détecteur 10.

On peut par exemple utiliser une gaine optique en silice, en verre à base de silice, en verre organique, en verre fluoré, en verre de chalcogénure ou en un matériau polymère.

L'extrémité de la fibre optique 4 peut être fixée à l'élément détecteur 14 par des moyens mécaniques appropriés 16 ou à l'aide d'une couche de colle optique 18 disposée à l'interface entre le cristal détecteur 10 et la fibre 4, comme on le voit sur la figure 1.

Cette colle sert à la fois à fixer l'élément détecteur à la fibre et à assurer le couplage optique entre le cristal détecteur 10 et le coeur 6 de la fibre.

Il est avantageux de disposer une couche 20 apte à réfléchir la lumière engendrée par interaction du cristal avec le rayonnement, à l'extrémité de l'élément détecteur 14, opposée à celle qui est couplée à la fibre optique 4, comme on le voit sur la figure 1.

Ceci permet de quasiment doubler la quantité de lumière collectée par la fibre optique 4 et d'augmenter ainsi la sensibilité du dispositif de détection.

La couche 20 est par exemple une couche de 100 nm d'aluminium déposée sous vide.

Il est à noter que, si l'on utilisait un cristal détecteur de forme cubique, de 2 mm de côté par exemple, à la place du barreau 10, à l'extrémité de la fibre optique 4, l'utilisation d'une telle couche réflectrice n'aurait quasiment aucune efficacité.

Il est préférable de choisir l'indice optique du cristal détecteur 10 et l'indice optique de la gaine 12 qui lui est associée de manière que l'ouverture numérique de l'élément détecteur 14 soit légèrement inférieure à celle de la fibre optique 4.

Dans ce cas, la transmission de la lumière se fait en-deçà de l'angle limite de réflexion totale de fibre optique 4.

On réduit ainsi les risques de perturbation du signal lumineux transmis par la fibre, par des variations de courbure de cette dernière.

De plus, il est avantageux de recouvrir la paroi externe de la gaine optique 12 d'une couche 22 capable d'absorber la lumière émise par interaction du cristal avec le rayonnement, dans des angles supérieurs à l'ouverture déterminée par l'angle limite de réflexion totale sur la face commune au cristal et à sa gaine optique.

On voit sur la figure 1 un point P en lequel un rayonnement a interagi avec le cristal détecteur et un rayon lumineux 24 résultant de cette interaction, qui se réfléchit d'abord à l'interface entre le cristal détecteur 10 et la gaine 12 puis sur la couche réflectrice 20 puis à nouveau à l'interface entre le cristal et la gaine optique 12, et qui passe ensuite dans le coeur de la fibre 4 (on a supposé dans l'exemple représenté que l'indice optique du coeur 6 de la fibre est égal à celui du cristal 10) pour se propager ensuite dans cette fibre 4.

On a représenté en pointillé l'angle limite de réflexion totale 26 de la fibre 4 et l'on voit, dans le cas de la figure 1, que l'angle limite de réflexion totale relatif à l'élément détecteur 14 est inférieur à cet angle limite 26.

Le dispositif conforme à l'invention, qui est schématiquement et partiellement représenté sur la figure 2 diffère de celui de la figure 1 par le fait que, dans l'élément détecteur 14 du dispositif de la figure 2, le cristal détecteur 28 est fait d'un matériau inorganique à luminescence stimulée optiquement.

Pour stimuler cette luminescence, on utilise une source 30 de rayonnement de stimulation 32 et un miroir dichroïque 34 permettant l'injection de ce rayonnement de stimulation 32 dans l'extrémité de la fibre optique 4, opposée à celle qui est optiquement couplée au cristal détecteur 28.

Ainsi, lorsqu'un rayonnement 2 à détecter interagit avec le cristal détecteur 28, une lumière visible 36 est émise par ce cristal détecteur 28 stimulé par le rayonnement 32 et cette lumière 36 passe dans la fibre optique 4 pour traverser ensuite le miroir dichroïque (qui est prévu pour réfléchir au moins en partie le rayonnement 32 et laisser au moins en partie cette lumière 36).

En tant que matériau à luminescence stimulable optiquement, on peut utiliser par exemple des sulfures dopés ou des verres dopés (silice, oxydes comme par exemple l'oxyde de germanium, verres optiques, verres fluorés).

Les dopants peuvent être choisis dans le groupe des terres rares.

Les éléments ayant des niveaux d'énergie métastables peuvent être le samarium ou l'europium par exemple.

A titre d'exemple, on utilise une fibre optique dont le coeur a un diamètre de 200 µm ou 1 mm, on lui associe un barreau en SrS (matériau mentionné dans le document (4)) et l'on insère ce barreau dans un tube de silice (dont le diamètre interne vaut 200 µm ou 1 mm) que l'on couple optiquement à cette fibre.

Dans ce cas, en faisant abstraction de l'absorption propre du matériau constitutif du barreau, l'efficacité de détection reste à la valeur maximale (limitée par l'ouverture numérique de la fibre optique) sur toute la longueur du barreau.

Le gain en sensibilité d'un tel dispositif de détection de rayonnement, par rapport au dispositif proposé dans le document (4), est proportionnel à la longueur utile (longueur du barreau).

Une longueur de l'ordre de 10 mm fait gagner plus d'un ordre de grandeur en sensibilité par rapport au dispositif décrit dans ce document (4).

Un dispositif conforme à l'invention peut être fabriqué en utilisant un tube de température de fusion élevée, par exemple en silice, que l'on trempe dans un bain d'un matériau scintillant fondu.

On fait ensuite cristalliser ce dernier, d'où un élément détecteur, et l'on enlève ensuite le matériau scintillant qui se trouve sur la paroi externe du tube de silice.

On peut fabriquer un dispositif conforme à l'invention comprenant un barreau en matériau scintillant inorganique (NaI(Tl), CsI, BGO par exemple) de faible diamètre qui peut aller de 200 à 1000 µm par exemple.

Un tel dispositif constitue un détecteur très intéressant pour la dosimétrie à fibres optiques.

A l'échelle du millimètre, les problèmes de rétreint dus à la réalisation de cristaux in situ dans des tubes, à température élevée, sont minimisés.

Le contact optique entre un barreau constituant le cristal détecteur et la gaine optique associée est maintenu.

Il est de toute manière préférable de choisir, pour ce cristal et cette gaine, des matériaux ayant des coefficients de dilatation thermique voisins.

On peut obtenir un cristal détecteur dans une gaine optique par un procédé d'injection, de pression ou d'étirage si le matériau constitutif du cristal détecteur supporte une fusion (suivie d'un refroidissement) sans perte de ses propriétés.

Le matériau constitutif de la gaine optique peut être la silice ou un verre d'indice optique convenable et de propriétés mécanique et thermique choisies en fonction des caractéristiques du cristal détecteur qu'on veut lui associer.

Les cristaux scintillants inorganiques présentent, du fait de leur densité plus élevée, une meilleure capacité de détection des rayonnements γ que les scintillateurs organiques.

Ceci est très important dans le cas où l'on veut détecter des rayonnements naturels au moyen d'un cristal détecteur dont deux dimensions sont déjà imposées par le diamètre de la fibre optique qu'on veut lui associer.

Pour une même longueur de matière traversée, l'énergie déposée est plus importante (pour des électrons, le dépôt d'énergie par centimètre est 2,5 fois plus élevé pour NaI que pour un matériau scintillateur plastique) et le rendement lumineux, pour la même énergie déposée, est quatre fois plus élevé.

Il est à noter que la gaine optique associée au cristal détecteur constitue également une protection, par exemple vis-à-vis de l'humidité.

Les performances d'un dispositif de détection conforme à l'invention sont très supérieures à celles des dispositifs connus comprenant des fibres optiques, grâce à l'utilisation de la gaine optique autour du cristal détecteur.

L'invention permet d'atteindre des sensibilités en mesure de dose de l'ordre de 10 µSv/h, voire 1 µSv/h, ce qui permet de l'utiliser pour faire des mesures impossibles à réaliser avec les dispositifs connus.

On peut par exemple effectuer des mesures dosimétriques en temps réel pour des travailleurs dans le domaine nucléaire, par exemple au niveau des extrémités particulièrement exposées comme les mains et les pieds et également au niveau des organes sensibles.

De plus, la transmission du signal de mesure par fibre optique permet d'accéder à une information en temps réel sur la dose reçue et donc de suivre l'évolution du risque en cours de travail.

De plus, grâce aux réseaux de fibres optiques, des dispositifs conformes à l'invention peuvent être utilisés pour la surveillance à distance de sites et un grand nombre de points de mesure peut être associé à un seul système de traitement des informations, qui représente généralement la partie la plus coûteuse d'un équipement de mesure.

## Revendications

1. Dispositif de détection à distance de rayonnement (2), ce dispositif comprenant une fibre optique (4) et un cristal détecteur (10, 28) qui est fait d'un matériau inorganique, dont une extrémité est optiquement couplée à la fibre optique et qui est apte à émettre, par interaction avec le rayonnement, une lumière se propageant ensuite dans la fibre optique, ce dispositif étant caractérisé en ce qu'il comprend en outre une gaine optique (12) qui entoure le cristal détecteur, qui est en contact optique avec celui-ci et dont l'indice optique est inférieur à celui du cristal détecteur, de manière à confiner ladite lumière, par réflexion totale à l'interface entre le cristal détecteur et la gaine optique.

2. Dispositif selon la revendication 1, caractérisé en ce que la dimension du cristal détecteur (10, 28), comptée suivant l'axe (X) de la fibre optique (4), est supérieure aux dimensions de ce cristal détecteur, comptées perpendiculairement à cet axe.

3. Dispositif selon l'une quelconque des revendications 1 et 2, caractérisé en ce que les dimensions du cristal détecteur (10, 28), comptées perpendiculairement à l'axe (X) de la fibre optique (4), sont sensiblement égales à celles du coeur (6) de cette fibre optique, comptées perpendiculairement à cet axe.

4. Dispositif selon l'une quelconque des revendications 1 à 3, caractérisé en ce que les indices optiques respectifs du cristal détecteur (10, 28) et de la gaine optique (12) sont choisis de façon que l'ouverture numérique du cristal détecteur pourvu de cette gaine optique soit légèrement inférieure à celle de la fibre optique (4).

5. Dispositif selon l'une quelconque des revendications 1 à 4, caractérisé en ce que la paroi externe de la gaine optique (12) est recouverte d'une couche (22) apte à absorber ladite lumière.

6. Dispositif selon l'une quelconque des revendications 1 à 5, caractérisé en ce que l'extrémité du cristal détecteur (10, 28), opposée à celle qui est optiquement couplée à la fibre optique (4), est recouverte d'une couche (20) apte à réfléchir ladite lumière.

7. Dispositif selon l'une quelconque des revendications 1 à 6, caractérisé en ce que le cristal détecteur (10) est fait d'un matériau inorganique scintillant.

8. Dispositif selon la revendication 7, caractérisé en ce que le matériau inorganique scintillant est choisi dans le groupe comprenant le germanate de bismuth, l'iodure de sodium, le tungstanate de calcium, le tungstanate de cadmium, le fluorure de césium, le fluorure de calcium et l'iodure de lithium.

9. Dispositif selon l'une quelconque des revendications 1 à 6, caractérisé en ce que le cristal détecteur (28) est fait d'un matériau inorganique à luminescence stimulable optiquement.

10. Dispositif selon la revendication 9, caractérisé en ce que le matériau à luminescence stimulable optiquement est choisi dans le groupe comprenant les sulfures dopés, la silice dopée, les oxydes dopés tel que l'oxyde de germanium dopé, les verres optiques dopés et les verres fluorés dopés, les dopages étant faits à l'aide de terres rares.

11. Dispositif selon l'une quelconque des revendications 1 à 10, caractérisé en ce que la gaine optique (12) est faite d'un matériau choisi dans le groupe comprenant la silice, les verres à base de silice, les verres organiques, les verres fluorés, les verres de chalcogénures et les matériaux polymères.
